# EUROPEAN PATENT APPLICATION

(11) **EP 4 607 184 A1**
(43) Date of publication of application: **27.08.2025**
(21) Application number: 25160219.9
(22) Date of filing: 26.02.2025
(51) Int. Cl.: G01N 23/223, G06V 20/80, G06F 21/64

(54) **METHOD FOR IDENTIFYING ART OBJECTS THROUGH IMAGE ACQUISITION OF DEEPER LAYERS BENEATH THE SURFACE USING MA-XRF TECHNOLOGY**

(30) Priority: 26.02.2024 IT 202400004000
(71) Applicant: Idartscience S.r.l., 00195 Roma (IT)
(72) Inventor: RIDOLFI, Stefano, 00188 Roma (IT); CONTINI, Claudio, 00124 Roma (IT); PAOLELLI, Mario Alessandro, 00122 Roma (IT); PIRRO, Stefano, 64020 Castellalto (IT); VENTURINI, Luca, Nassau (BS)
(74) Representative: Savi, Massimiliano

(57) **Abstract**

A method for identifying art objects based on employing an MA-XRF apparatus in order to acquire information from the layers underlying the surface. Since this information does not vary or varies very slowly over time, and cannot be reproduced because it is hidden below the visible surface, a subsequent analysis by means of an MA-XRF apparatus carried out on the same part of the surface is useful to verify that the art object is the same or that it has not been altered.

## Description

### FIELD OF THE INVENTION

The present invention relates to a method for identifying art objects, in particular for verifying the authenticity thereof with respect to a possible fraudulent replacement.

### BACKGROUND ART

Several methods exist for identifying art objects, e.g., paintings, for anticounterfeiting purposes. Some of these methods include applying a label, e.g., a hologram, special labels or inks which are invisible to the naked eye. These methods lose effectiveness over time, whereby they are circumvented with a consequent increase in the risk of counterfeiting genuine art objects and paintings. Another method consists in writing nanometric text by means of synchrotron light, but this technique can also be replicated by the counterfeiter being able to recognize the point of application employing simple ultraviolet light.

Other methods are attributable to an optical analysis of the painting, weather in the field of visible light, in the infrared and ultraviolet fields, and in the radiographic field.

These techniques are certainly non-invasive, but do not actually have any decisive added value with respect to a merely visual analysis.

The development of scanning systems and 3-D printers characterized by an everincreasing spatial resolution suggest not basing the recognition of an art object, e.g., a painting, only on the analysis of the most superficial layer, the visible one. Moreover, the possible restorations that all art objects and in particular paintings undergo over time also make the investigation techniques based on the analysis of surface paint unreliable.

Therefore, the analysis of the deepest layers of the art object and the painting is the only identification method which is immune to any alterations, substitutions, and counterfeits in general.

### SUMMARY OF THE INVENTION

It is the object of the present invention to provide a method for identifying art objects such as paintings, for example, which solves the problems of the methods known from the prior art and which is, in particular, suitable for any type of painting, made on a new canvas, or on an already previously painted canvas or even made on other types of supports, such as wooden boards or paper, for example.

The method according to the present description includes a first scan of an art object, e.g., a painting, or of a part thereof, and a subsequent scan of what is supposed to be the same art object, in order to establish the authenticity and the absence of counterfeits or manipulation thereof, even limited.

The aforesaid scans are carried out with an apparatus which applies a technique, referred to as MA-XRF, based on X-Ray Fluorescence (XRF) used in MACRO mode, such as to chemically characterize a portion and not only a single point of the art object, e.g., a painting, subjected to characterization or investigation.

In further detail, said MACRO X-Fluorescence technique, or MA-XRF, is a spectroscopic technique which, in a totally non-invasive manner, allows characterizing the deep layers forming the portion of the art object analyzed by virtue of the analysis of the emitted X-radiation, i.e., of the so-called characteristic X-Fluorescence.

The analysis is, as mentioned, absolutely non-invasive as it does not require the removal or alteration of the art object, e.g., a painting, to be analyzed and can also operate through the air. Furthermore, the method according to the present description can be carried out through portable apparatuses, a very useful feature if the art object to be analyzed should not or cannot be moved.

It is the main advantage of such a technique to define and determine the deep images of a portion of an art object analyzed down to its innermost layers, precisely taking advantage of the penetrating features of X-rays, thus making it possible to visualize the underlying and deep layers of the art object which are not visible to the naked eye and cannot be reached in any other manner.

According to another aspect of the invention, said method based on MA-XRF can be suitably combined with methods based on the reflection or crossing of the art object or the canvas of a painting by electromagnetic radiation in the visible field and/or the infrared field and/or fields in the ultraviolet and/or radiographic spectrum.

The method according to the present description is particularly reliable by virtue of the fact that the chemical features of the art object or painting do not vary or vary very slowly over time and therefore represent very reliable indicators of whether or not the art object or painting has been altered or tampered with. Furthermore, the method according to the present description is practically impossible to circumvent, as it operates on the deepest, invisible, layers of the art object that any forger or counterfeiter cannot reach.

Finally, the method of the present invention is advantageously particularly unexpensive to implement.

### DETAILED DESCRIPTION OF THE INVENTION.

Through an analysis by means of the MACRO X-Fluorescence technique, or MA-XRF, of a predefined portion of an art object such as a painting, for example, it is possible to characterize not only the chemical elements of the most superficial layers, but also of the deepest ones, certainly not visible. By virtue of the penetrating capabilities of X-radiation, different images of the layers can be obtained at different depths, which images are unique for each chosen surface of the art object.

Therefore, the method according to the present description comprises a first step of analyzing at least one portion of the art object, a second step of analyzing the same identical portion of the art object which is supposed to be the same object previously analyzed, and a third step of comparing the deep images obtained from said first step and said second step of analysis.

In detail, the method according to the present description includes, in a preferred embodiment, carrying out a first analysis of at least one portion of a painting, or of a general art object, by scanning by means of an MA-XRF apparatus adapted to detect information regarding the deep layers related to said at least one portion of an art object; storing the data related to said first analysis; a second analysis of said at least one portion of an art object, which is supposed to be the same object previously analyzed, by means of said MA-XRF apparatus, and comparing the information regarding the deep layers, underlying the visible surface, obtained during the aforesaid first and second analyses. The aforesaid comparison can be carried out, for example, by means of local statistical processing and/or by processing the detected images, as a whole or considering only part of said images.

It is apparent that if the information regarding the deep layers is different, then the art object (or the painting) subjected to the second analysis is not the same art object subjected to the first analysis, but is a different art object or is the same art object which has been subjected to the first analysis but has suffered an important alteration in the meantime, a counterfeit.

The described method is not invasive towards the art object or painting and therefore can be applied as many times as necessary, without limitations. The results of the analyses carried out on the same art object will constantly remain the same and consistent.

The advantage of the method in hand lies in the inherent security given by the fact that no forger, even if aware of the stratigraphic chemical composition of the art object, would ever be able to reproduce, in addition to surface images, also images related to the deep layers of the art object.

A procedure for certifying the authenticity of an art object based on the method according to the present description can add a further level of security by keeping secret the position of the portion of the art object subject to investigation. A forger who wanted to try to alter the chemical stratigraphy of the art object to try to pass the described authenticity test, would thus have to operate on the entire surface of the art object instead of on a limited portion. Therefore, this would make the operation more complicated and practically impossible.

The method of the present description can be applied to both ancient art objects or paintings, and modern art objects or paintings.

As for modern paintings, in order to promote and facilitate the future application of the described method, the author of the painting can employ special colors to which an appropriate chemical component has been added, capable of enhancing the application of the technique according to the described method by functioning in a manner similar to a tracer. For example, the painter could paint a base below the surface with Zinc white and instead use Titanium white on the surface, so as to increase the emission X of the painting which will be detected by the method according to the present description.

The aforesaid chemical component having the function of tracer can also be prepared in a protective paint to be applied to protect the art object or the painting, for example on the occasion of a restoration thereof.

As mentioned, the method according to the present description can be employed for paintings but also, more generally, for other types of art objects - such as sculptures, for example - and can advantageously be used for cataloging works of art, which operation is regularly carried out by the administrations of museums, foundations, and private galleries.

When applying the method of the present description to works of art other than paintings, the procedure is exactly the same: a first step of investigation by scanning by means of an MA-XRF apparatus of a portion of the work with consequent acquisition of information from the deep non-visible layers of the work itself; a second step of carrying out a second scan by means of an MA-XRF apparatus of the same portion of the work, and finally a third step of comparing the results obtained from the first two steps: if these results are the same, then the work has not been counterfeited and can be considered genuine.

The described method can be advantageously applied to paintings, and works of art in general, so as to be able to then recognize the same painting and the same work of art, for example, after the recovery following a theft or after the return following a loan for exhibitions and events.

It is advisable that the areas of the art object or painting analyzed according to the present method are multiple, so as to be able to recognize the same painting even following a damaging thereof, even partial, in which one of the areas monitored has been altered or removed as a result of the damage suffered.

In accordance with the method according to the present description, the results of the aforesaid first analysis, including the deep images detected which are not visible to the naked eye, are stored in an electronic archive, a file, a HASH of which is produced, which will be inserted into a Blockchain so as to make known the insertion date of the HASH itself and thus of the file with the deep images detected. This ensures the integrity of the results of the first analysis and the fact that said results can no longer be falsified.

Therefore, according to this preferred embodiment, said first analysis can comprise the following steps:
- Selecting at least one portion of the surface of the painting (or art object);
- Storing the portion of the painting to be investigated through photographs taken in the visible range and/or in other wavelengths outside the visible range;
- Storing the type of MA-XRF apparatus employed and the related settings including, for example, operating voltage, filament current, possibly selected filters, the material defining the anode, the type of detector employed by the apparatus, distance of the art object from the measuring head of the MA-XRF device, etc.;
- Scanning said surface portion by means of an MA-XRF apparatus configured according to the previous step;
- Detecting information regarding the deep layers related to said portion and not visible on the surface;
- Associating with said surface portion of the painting first identification data including the detections made by means of said scanning, and possibly the operating parameters of the MA-XRF apparatus employed;
- Storing said identification data.

In order to ensure the integrity of the results of the first analysis and the fact that said results can no longer be falsified, the following further steps can be carried out:
- Defining the HASH of said first identification data;
- Inserting said HASH into a Blockchain to ensure the operations carried out. Furthermore, according to this preferred embodiment, said second analysis, aimed at recognizing a previously identified painting, comprises the following steps:
- Reading the identification data related to the painting, collected and stored during an initial analysis (these data can advantageously include the position of the portions of the work which have been analyzed, the type of MA-XRF apparatus employed for the first analysis and the related parameters of use);
- Selecting at least one portion of the previously analyzed painting the location of which is stored in said identification data;
- Choosing an MA-XRF apparatus of the same type as the apparatus employed for the first analysis and setting the related operating parameters as reported in said identification data;
- Analyzing said at least one surface portion by means of an MA-XRF apparatus configured according to the parameters defined in the previous step
- Comparing the measurements made in the previous step with those contained in said identification data.

If from the aforesaid comparison the measurements made with the second analysis coincide with the measurements made with the first analysis, then the painting is definitely the same as previously analyzed and therefore has not been replaced and has not been counterfeited.

Conversely, if the measurements made with the second analysis do not coincide with the measurements made with the first analysis, then the painting is not the original one but a replacement or counterfeit of the original.

## Claims

1. A method for securely identifying an art object comprising:
first analysis of at least one portion of the surface of said art object performed by scanning by means of an MA-XRF apparatus and detecting first identification data of said art object comprising information regarding the deep layers related to said at least one portion of the surface of said art object;
storing said first identification data;
second analysis of said at least one portion of the surface of a second art object which is supposed to be the same art object subjected to the first analysis,
performed by scanning by means of an MA-XRF apparatus, and detecting second identification data of said second art object comprising information regarding the deep layers related to said at least one portion of the surface of said second art object;
comparing the first identification data with the second identification data;
if said first identification data are equal to said second identification data, then the second art object is the same art object subjected to said first scan.

2. A method according to the preceding claim , wherein said first identification data and said second identification data comprise multi-plane images comprising information present at different depths.

3. A method according to the preceding claim, wherein said comparing the first identification data with the second identification data occurs by processing said images.

4. A method according to one or more of the preceding claims, wherein said comparing the first identification data with the second identification data occurs through local statistical comparisons.

5. A method according to one or more of the preceding claims, wherein said first identification data further comprises at least one photograph of the portion of the art object subjected to said first analysis, the type of MA-XRF apparatus employed during said first analysis, and the related settings.

6. A method according to the preceding claim, wherein said at least one photograph of the portion of the art object subjected to said first analysis is taken with wavelengths outside the visible field.

7. A method according to one or more of the preceding claims 5 and 6, wherein said settings are selected from the group comprising operating voltage, filament current, selected filters, the material defining the anode, the type of detector employed, distance of the art object from the measuring head of the MA-XRF device.

8. A method according to one or more of the preceding claims, wherein said first identification data is associated with a HASH which is then inserted into a Blockchain.

9. A method according to one or more of the preceding claims, wherein said at least one portion of the surface of said art object has been associated with a tracer detectable by scans performed by means of an MA-XRF apparatus.

10. A method according to the preceding claim, wherein said tracer is applied to said at least one portion of the surface of said art object by means of a protective paint to which said tracer is added.
